# EUROPÄISCHE PATENTSCHRIFT

(11) **EP 1 442 942 B1**
(45) Veröffentlichungstag und Bekanntmachung des Hinweises auf die Patenterteilung: **26.04.2006**
(21) Anmeldenummer: 03030049.5
(22) Anmeldetag: 27.12.2003
(51) Int. Cl.: B60R 19/24, F16B 5/02, F16B 7/04

(54) **Flanschverbindung zwischen einem Fahrzeuglängsträger und einem daran ansetzbaren Trägerelement**
Flange coupling between a longitudinal beam of a vehicle and a support element fixable thereto
Raccord à brides entre un longeron de véhicule et un élément de support fixable à ce dernier

(30) Priorität: 23.01.2003 DE 10302534
(43) Veröffentlichungstag der Anmeldung: 04.08.2004
(73) Patentinhaber: Hella-Behr Fahrzeugsysteme GmbH, 59557 Lippstadt (DE)
(72) Erfinder: Braun, Dieter, Dipl.-Ing., 33378 Rheda-Wiedenbrück (DE); Wiehen, Cornelia, 59590 Geseke (DE); Raulf, Robert, Dipl.-Ing., 59555 Lippstadt (DE)
(74) Vertreter: Elbertzhagen, Otto

(56) Entgegenhaltungen:
- EP-A- 0 417 654
- DE-A- 19 854 050
- DE-C- 19 711 166

## Beschreibung

Die Erfindung bezieht sich auf eine Flanschverbindung gemäß dem Oberbegriff des Patentanspruchs 1.

Aus der Offenlegungsschrift DE 198 54 050 A1 ist eine solche Flanschverbindung bekannt. Durch die Flanschplatte und die Gegenflanschplatte tritt ein Gewindebolzen hindurch, auf dessen beide Enden Muttern aufgeschraubt werden, die sich an den Innenseiten der Flanschplatte und der Gegenflanschplatte abstützen. Bei dieser bekannten Schraubverbindung geht es darum, die beiden miteinander verbundenen Bauteile auch dann noch voneinander lösen zu können, wenn insbesondere die in Fahrtrichtung vornliegende Mutter des Fahrzeugs infolge Beschädigungen nicht mehr zugänglich sein sollte.

Für die lösbare Verbindung von Fahrzeugbauteilen sind ferner Ausführungen bekannt, die ohne Flanschplatten auskommen. Hierzu beschreibt die Patentschrift EP 0 721 878 B1 eine Baugruppenverbindung, die miteinander verhakbare Anschlußprofile aufweist, deren Formschluß durch eine Spannschraube gesichert wird.

Aus dem Dokument DE 197 11 166 C1 ist eine Halterung von Gehäusen oder Ummantelungen mittels eines Aufnahmezapfens an Tragwänden oder Karosseriewänden von Kraftfahrzeugen bekannt. Die betreffende Wand ist mit einem Schlitz versehen, in den in radialer Richtung der Zapfen mit seinem zwischen einem Flansch und einem Kopf befindlichen Hals eingreift. An dem Kopf sind geneigte Keilschrägen vorgesehen, die mit. Keilflächen eines Spannkeils zusammenwirken, der auf den Zapfenkopf aufsetzbar ist. Der Zapfen liegt mit seinem Flansch an der einen Seite der betreffenden Wand und der Spannkeil an der gegenüberliegenden Seite dieser Wand an, wobei der Spannkeil und der Kopf des Zapfens mittels einer Spannschraube zwecks Verkeilung unter Anpressen des Zapfenflansches an der Fahrzeugwand miteinander verspannbar sind. Bei dieser Art von Halterungen muß der Spannkeil frei zugänglich sein.

Der Erfindung liegt die Aufgabe zugrunde, eine Flanschverbindung der eingangs genannten Art zu schaffen, bei der die Flanschplatte am ersten Bauteil und die Gegenflanschplatte am zweiten geschlossenen Bauteil ebenfalls über formschlüssig ineinander eingreifbare, wieder lösbare Verbindungselemente gegeneinander verspannbar sind.

Diese Aufgabe wird bei einer Flanschverbindung mit den Merkmalen des Oberbegriffs des Anspruchs 1 durch dessen kennzeichnende Merkmale gelöst.

Für die Erfindung ist wesentlich, die Verspannung der Flanschplatte und der Gegenflanschplatte gegeneinander über eine Keilverbindung vorzunehmen, die ein bewegliches Element, das Verriegelungsteil, aufweist, welches zum Spannen und zum Lösen der Flanschverbindung sich in einer Ebene verschiebt, die parallel zu der Flanschebene ist. Die dazu erforderliche Betätigung der gegen den Verbindungsbolzen anziehbaren Spannschraube kann aus einer Richtung vorgenommen werden, die nicht mit der Längsrichtung des Fahrlängsträgers und des daran ansetzbaren Trägerelementes zusammenfällt, was die Zugänglichkeit zur Spannschraube auch im Beschädigungsfalle verbessert. Des weiteren läßt sich eine Verschieblichkeit der Flanschplatte und der Gegenflanschplatte relativ zueinander leicht realisieren, indem man das Spiel um den Verbindungsbolzen herum in der Durchtrittsöffnung der Gegenflanschplatte ausreichend groß macht und für das Verriegelungsteil einen ausreichenden Verschiebespielraum an der Innenseite der Gegenflanschplatte vorsieht. Dies ermöglicht einen Toleranzausgleich für am Trägerelement angeordnete Fahrzeugbauteile durch eine Justage relativ zum Fahrzeuglängsträger sowohl in der Fahrzeugquerrichtung, der Y-Richtung, als auch in der Fahrzeughöhenrichtung, der Z-Richtung.

Vorteilhafte Ausgestaltungsmerkmale der Erfindung ergeben sich aus den Unteransprüchen.

Die Erfindung wird nachfolgend anhand der Zeichnung an einem Ausführungsbeispiel noch näher erläutert. Dabei zeigen:
- Fig. 1: in perspektivischer, gesprengter Darstellung die Elemente einer Flanschverbindung der vorgenannten Art,
- Fig. 2: in perspektivischer, aufgeschnittener Darstellung die Flanschverbindung gemäß Figur1 in der Verbindungslage,
- Fig. 3: einen Längsschnitt durch die Flanschverbindung vor dem Zusammenfügen von Flanschplatte und Gegenflanschplatte,
- Fig. 4: einen Längsschnitt durch die Flanschverbindung in der Verbindungslage,
- Fig. 5: eine perspektivische Darstellung der Gegenflanschplatte an dem betreffenden Bauteil und des Verriegelungsteils in der Position unmittelbar vor dem Durchführen durch die Durchtrittsöffnung der Gegen- flanschplatte und
- Fig. 6 u. 7: Längsschnitte durch die Gegenflanschplatte und das Bauteil.nach Fig. 5 zum einen bei teilweise durchgeführtem und zum anderen in die Endlage überführtem Verriegelungsteil.

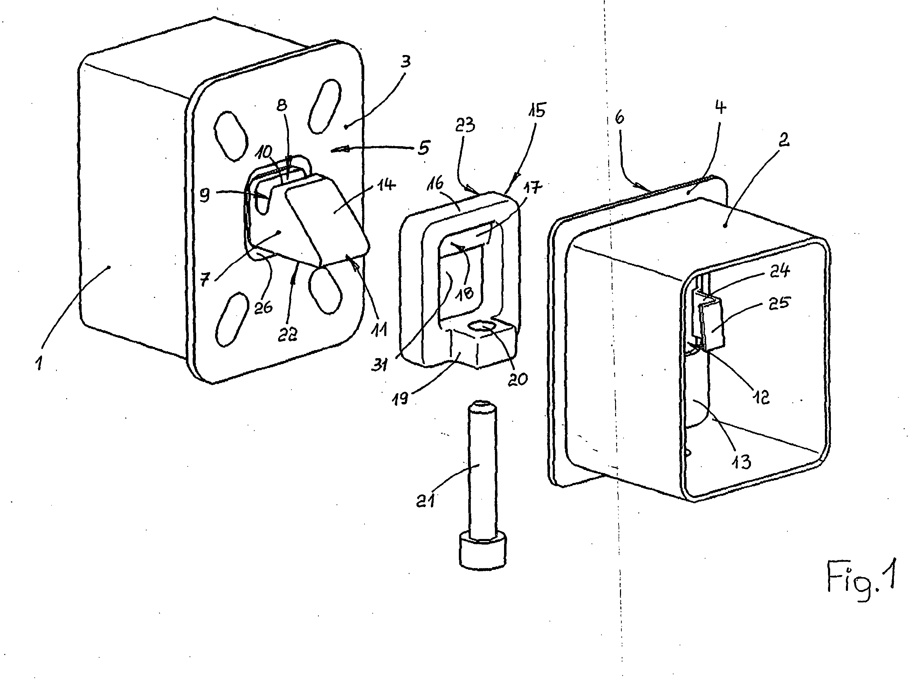

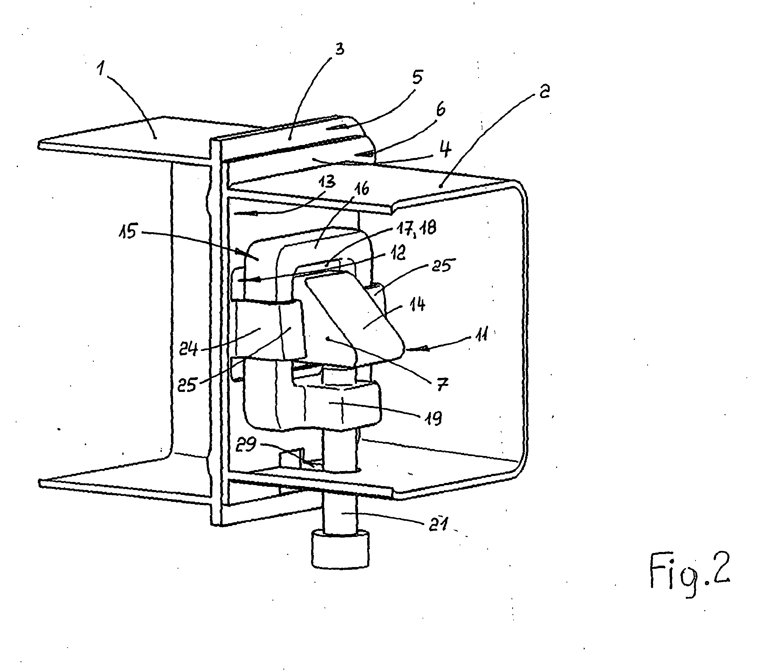

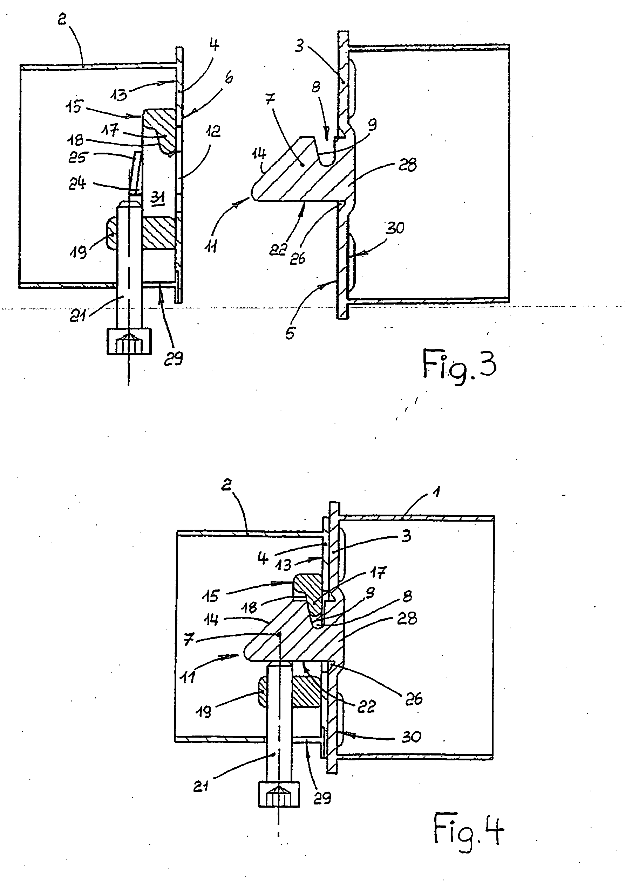

Fig. 1 zeigt im einzelnen einen Abschnitt eines Fahrzeug-Bauteils 1, bei dem es sich um das Vorderende eines Fahrzeuglängsträgers handelt. An das Bauteil 1 ist in Verlängerung von dessen Längsrichtung ein zweites Bauteil 2 ansetzbar, welches ein Trägerelement für Fahrzeuganbauten darstellt, das in bevorzugter Ausführung als Crashbox ausgebildet ist. An dem einen dieser beiden Bauteile, hier an dem Bauteil 1, ist am Stirnende eine Flanschplatte 3 fest angesetzt, und in gleicher Weise findet sich an dem rückwärtigen Stirnende des zweiten Bauteils 2 eine fest angesetzte Gegenflanschplatte 4. Zwecks Verbindung der beiden Bauteile 1 und 2 können die Flanschplatte 3 und die Gegenflanschplatte 4 gegeneinander verspannt werden, wobei die Außenseite 5 der Flanschplatte 3 an der Außenseite 6 der Gegenflanschplatte 4 anliegt. Die Verbindungslage der gesamten Flanschverbindung geht aus den Figuren 2 und 4 hervor.

An der Flanschplatte 3 des Bauteils 1 steht an der Außenseite 5 ein Verbindungsbolzen 7 vor, der fest mit der Flanschplatte 3 ist. Zweckmäßig ist der Verbindungsbolzen 7 zentral an der Flanschplatte 3 angeordnet, und er wird von einer von der Außenseite 5 der Flanschplatte 3 her eingesenkten Sicke 26 umgeben, die in einem sehr beschränkten Maße eine Lageveränderung des Verbindungsbolzens 7 relativ zur Flanschplatte 3 zuläßt. Grundsätzlich ist jedoch der Verbindungsbolzen 7 mit seiner Längsrichtung orthogonal zur Ebene der Flanschplatte 3 ausgerichtet.

An sich kann der Verbindungsbolzen 7 beliebige Querschnitte haben, so auch einen runden Querschnitt. Beim Ausführungsbeispiel ist der Verbindungsbolzen 7 im Querschnitt rechteckig oder quadratisch ausgeführt, wodurch sich unter anderem eine großflächige Auflaufschräge 14, die sich über den gesamten Bolzenquerschnitt erstreckt, am vorderen, freien Ende 11 des Verbindungsbolzens 7 ergibt. Nahe der Flanschplatte 3 ist in den Verbindungsbolzen 7 eine zu seiner Längsrichtung im wesentlichen senkrechte Quernut 8 eingeformt, die sich folglich in Richtung einer Radialebene des Verbindungsbolzens 7 erstreckt. Die Quernut 8 hat eine an der Außenseite des Verbindungsbolzens 7 liegende Oberkante 10, die entlang einer der geraden Rechteck- oder Quadratseiten des Bolzenquerschnitts verläuft.

Von besonderer Bedeutung ist die von der Flanschplatte 3 wegliegende Flanke der Quernut 8, die eine Keilschräge 9 bildet. Von der zum freien Ende 11 des Verbindungsbolzens 7 hin liegenden Oberkante 10 der Quernut 8 aus neigt sich die Keilschräge 9 zum Nutgrund hin in Richtung auf die Flanschplatte 3 zu bzw. vom freien Ende 11 des Verbindungsbolzens 7 weg. Auf der der Quernut 8 gegenüberliegenden Seite des Verbindungsbolzens 7 ist aufgrund dessen rechteckigen oder quadratischen Querschnitts eine ebene Anlagefläche 22 gebildet, auf deren Funktion nachstehend noch eingegangen werden wird.

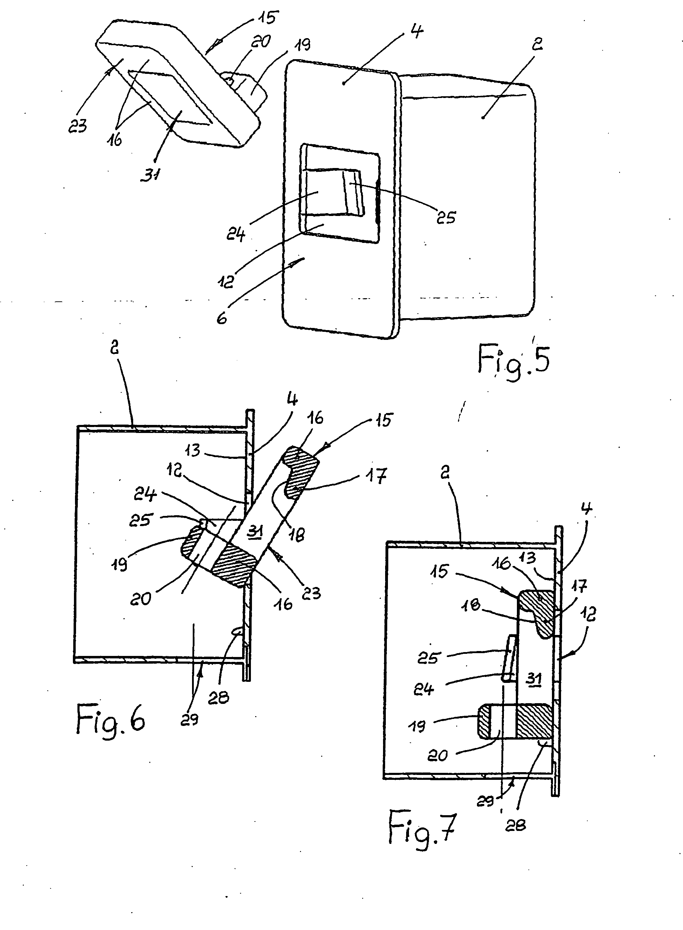

Wie die Figuren 2 und 4 veranschaulichen, ist in der Verbindungslage der Flanschverbindung der Verbindungsbolzen 7 an der Flanschplatte 3 durch die Gegenflanschplatte 4 am Bauteil 2 hindurchgetreten. Dazu ist in der Gegenflanschplatte 4 eine Durchtrittsöffnung 12 vorgesehen, die besonders gut in Fig. 5 zu erkennen ist. Die Durchtrittsöffnung 12 in der Gegenflanschplatte 4 hat zwar eine Grundform, die der Querschnittsform des Verbindungsbolzens 7 angepaßt ist, man erkennt jedoch vor allem in Fig. 4, daß die Weite der Durchtrittsöffnung 12 größer als für den Durchtritt des Verbindungsbolzens 7 erforderlich ausgeführt ist, so daß bei an der Flanschplatte 3 anliegender Gegenflanschplatte 4 letztere gegenüber der Flanschplatte 3 in allen Radialrichtungen des Verbindungsbolzens 7 um ein vorgegebenes Spiel verschoben werden kann, was solange nicht behindert wird, wie nicht der Verbindungsbolzen 7 am Rand der Durchtrittsöffnung 12 in der Gegenflanschplatte 4 anstößt. Liegt die Flanschplatte 3 mit ihrer Außenseite 5 an der Außenseite 6 der Gegenflanschplatte 4 an, befindet sich die Quernut 8 am Verbindungsbolzen 7 mit ihrer Keilschräge 9 vor der Innenseite 13 der Gegenflanschplatte 4, wobei die Keilschräge 9 einen Abstand von der Innenseite 13 der Gegenflanschplatte 4 hat, wie es sich aus Fig. 4 ergibt.

Die Sicherung der Flanschverbindung in der Verbindungslage erfolgt über ein mit dem Verriegelungsbolzen 7 zusammenwirkendes Verriegelungsteil 15. Wie vor allem aus Fig. 1 hervorgeht, ist das Verriegelungsteil 15 ein ringförmiges Gebilde, und es handelt sich um einen geschlossenen Ring in Rechteck- oder Quadratform, der entsprechend in gerader Richtung verlaufende Ringabschnitte 16 hat. Wie man Fig. 2 entnimmt, umgibt das ringförmige Verriegelungsteil 15 in der Verriegelungslage der Flanschverbindung den durch die Gegenflanschplatte 4 hindurchragenden Verbindungsbolzen 7, was voraussetzt, daß das Verriegelungsteil 15 auf die Innenseite 13 der Gegenflanschplatte 4 gebracht werden muß. Es versteht sich, daß die Ringöffnung 31 des Verriegelungsteils 15 für den Durchtritt des Verbindungsbolzens 7 ausreichend groß ist.

An demjenigen geraden Ringabschnitt 16 des Verriegelungsteils 15, der in der Verbindungslage an derjenigen Seite des Verbindungsbolzens 7 liegt, an dem sich dessen Quernut 8 befindet, ist längsseitig an der Innenseite ein Steg 17 angeformt, an dem eine Keilfläche 18 ausgebildet ist. Die Keilfläche 18 befindet sich an derjenigen Seite des Steges 17, der in der Verbindungslage der Keilschrägen 9 der Quernut 8 am Verbindungsbolzen 7 zugekehrt ist, außerdem entspricht der Neigungswinkel der Keilfläche 18 dieser Keilschrägen 9. In der Verbindungslage kommt das lose an der Innenseite 13 der Gegenflanschplatte 4 gehaltene Verriegelungsteil 15 mit dem Steg 17 in Eingriff mit der Quernut 8 des Verbindungsbolzens 7 an der Flanschplatte 3, indem der Steg 17 in die Quernut 18 eintaucht, wobei die Keilfläche 18 des Verriegelungsteils 15 und die Keilschräge 9 am Verbindungsbolzen 7 in Anlage aneinander gelangen. Infolge der Keilwirkung wirkt auf das Verriegelungsteil 15 eine Kraft in axialer Richtung des Verbindungsbolzens 7, wodurch das Verriegelungsteil 15 mit seiner einer Seite, der Anlageseite 23, in feste Anlage an der Innenseite 13 der Gegenflanschplatte 4 kommt. Umgekehrt wird auf den Verbindungsbolzen 7 aufgrund der Keilwirkung eine axiale Zugkraft ausgeübt, welche die Flanschplatte 3 gegen die Gegenflanschplatte 4 anzieht. Wie Fig. 4 deutlich macht, ist die Tiefe der Quernut 8 am Verbindungsbolzen 7 und damit die Eingriffslänge deren Keilschräge 9 einerseits sowie die Eingriffslänge der Keilfläche 18 am Steg 17 des Verriegelungsteils 15 andererseits so ausreichend lang bemessen, daß bei bestimmungsgemäßer Verspannung der Flanschplatte 3 gegen die Gegenflanschplatte 4 die freie Kante am Steg 17 des Verriegelungsteils 15 nicht auf dem Grund der Quernut 8 des Verbindungsbolzens 7 aufsitzt.

Damit in der Eingriffslage des Steges 17 am Verriegelungsteil 15 mit der Quernut 8 des Verriegelungsbolzens 7 die Verspannung durch weitere Verkeilung vorgenommen werden kann, ist am Verriegelungsteil 15 eine Spannschraube 21 angeordnet. Diese Spannschraube 21 ist in einer Gewindebohrung 20 aufgenommen, die sich in einer Konsole 19 am Verriegelungsteil 15 befindet. Die Konsole 19 ist an der dem Steg 17 gegenüberliegenden Seite des Verriegelungsteils 15 angeordnet und steht an der von der Anlageseite 23 abliegenden Seite dieses ringförmigen Gebildes vor. Wie aus den Figuren 2 und 4 hervorgeht, stützt sich in der Verriegelungslage die Spannschraube 21 an der Anlagefläche 22 des Verbindungsbolzens 7 ab, folglich wird mit dem Anziehen der Spannschraube 21 gegen den Verbindungsbolzen 7 das Verriegelungsteil 15 mit seinem Steg 17 in die Quernut 8 am Verbindungsbolzen 7 hineingezogen, wodurch aufgrund der Keilwirkung die Verspannung der Flanschplatte 3 mit der Gegenflanschplatte 4 bewirkt wird.

Bevor die Verspannung so stark ist, daß die Flanschplatte 3 und die Gegenflanschplatte 4 reibschlüssig aneinanderliegen, kann noch ein Justieren des Bauteils 2 relativ zum Bauteil 1 in Richtung der Flanschebene vorgenommen werden. Dazu kann nicht nur der Verbindungsbolzen 7 innerhalb der Durchtrittsöffnung 12 der Gegenflanschplatte 4 bewegt werden, auch das Verriegelungsteil 15 ist zunächst noch lose an der Innenseite 13 der Gegenflanschplatte 4 gehalten. Dazu dienen an den seitlichen Rändern der Durchtrittsöffnung 12 anschließende Haltelaschen 24, die mit dem Einstanzen der Durchtrittsöffnung 12 in die Gegenflanschplatte 4 aus dem dabei die Durchtrittsöffnung 12 freigebenden Materialstück herausgeprägt sind. Die Haltelaschen 24 stehen über die Innenseite 13 der Gegenflanschplatte 4 vor und erstrecken sich zu dieser in senkrechter Richtung. An ihren freien Enden haben sie abgewinkelte Stege, welche das an die Innenseite 13 der Gegenflanschplatte 4 angesetzte Verriegelungsteil 15 hintergreifen. Mittels dieser Stege 25 ist das Verriegelungsteil 15 ausreichend lose gehalten, so daß es parallel zur Ebene der Innenseite 13 der Gegenflanschplatte 4 verschiebbar ist, solange - wie erwähnt - die über das Verriegelungsteil 15 bewirkte Verspannung noch nicht so groß ist, um ein solches Verschieben zu hemmen.

In den Figuren 3 und 4 erkennt man ebenso wie in Fig. 1 die den Verbindungsbolzen 7 umgebende Sicke 26, welche in die Flanschplatte 3 eingeprägt ist. Aufgrund dieser Sicke 26 hat die Flanschplatte 3 für den Verbindungsbolzen 7 einen Befestigungsbereich 28, der über die Innenseite 30 der Flanschplatte 3 vorsteht. Weiter geht aus den Figuren 3 und 4 wie auch aus den Figuren 6 und 7 eine am Bauteil 2 befindliche Durchstecköffnung 29 hervor, die für das Anbringen der Spannschraube 21 vorgesehen ist. Die Spannschraube 21 liegt in radialer Richtung zum Verbindungsbolzen 7, soweit es die Verbindungslage der Flanschverbindung betrifft, und sie tritt zweckmäßig durch die Durchstecköffnung 29 hindurch, um sie außen am Bauteil 2 betätigen zu können. So ist nicht nur das Verspannen sondern auch das Lösen der beiden Bauteile 1 und 2 voneinander durch einen Zugriff von der Seite her möglich. Dies ist insbesondere bei dem als Crashbox ausgebildeten Bauteil 2 von Vorteil, wenn es infolge eines Frontalcrashes des Fahrzeugs deformiert sein sollte.

Die Figuren 5 - 7 machen die Besonderheit deutlich, daß das Verriegelungsteil 15 von der Außenseite 6 der Gegenflanschplatte 4 her durch die Durchtrittsöffnung 12 hindurch in das Innere des Bauteils 2 eingesetzt werden kann, weswegen im übrigen das Bauteil 2 mit Ausnahme der Durchstecköffnung 29 geschlossen ausgeführt werden kann. Die Durchtrittsöffnung 12 hat in Breitenrichtung eine Weite, die etwas größer als die Außenbreite des Verriegelungsteils 15 ist. Andererseits ist die Höhe der Durchtrittsöffnung 12 geringer als die Gesamthöhe des Verriegelungsteils 15, weshalb sich in der Verbindungslage das Verriegelungsteil 15 mit seinem oberen und seinem unteren Ringabschnitt 16 an der Innenseite 13 der Gegenflanschplatte 4 abstützen kann. Wie die Figuren 5 und 6 deutlich machen, wird das Verriegelungsteil 15 in geneigter Lage durch die Durchtrittsöffnung 12 der Gegenflanschplatte 4 hindurchgeführt, und nachdem es vollständig durch die Durchtrittsöffnung 12 hindurchgetaucht ist, in eine aufrechte Lage gebracht. Danach kann das Verriegelungsteil 15 nach oben hin verschoben werden, um es mit seiner Anlageseite 23 zugleich zur Anlage an der Innenseite 13 der Gegenflanschplatte 4 zu bringen. Daran ist unterhalb der Haltelaschen 24 ein Nocken 28 vorhanden, auf den die Unterseite des Verriegelungsteils 15 aufgesetzt werden kann. Ferner haben die abgewinkelten Stege 25 der Haltelaschen 24 eine solche Neigung, daß sich nach unten hin ihr Abstand von der Innenseite 13 der Gegenflanschplatte 4 vergrößert. Dies ermöglicht einerseits das Einführen des Verriegelungsteils 15 in den Innenraum des Bauteils 2 in der dargestellten geneigten Lage, andererseits wird in der nach oben geschobenen aufrechten Lage das Verriegelungsteil 15 so nahe an der Innenseite 13 der Gegenflanschplatte 4 gehalten, daß es nach dem Aufsetzen auf den Nocken 28 davon nicht herunterrutschen kann. Der Nocken 28 behindert die Spannlage des Verriegelungsteils 15 nicht, welches durch den beim Zusammenfügen der Flanschverbindung durchtretenden Verbindungsbolzen 7 aufgrund dessen stirnseitiger Auflaufschräge 14 nach oben hin verschoben wird.

## Patentansprüche

1. Flanschverbindung zwischen dem Stirnende eines Fahrzeuglängsträgers als erstem Bauteil (1) und einem daran in dessen Längsrichtung ansetzbaren, geschlossenen Trägerelement, wie einer Crashbox, als zweitem Bauteil (2), wobei an dem ersten Bauteil (1) eine Flanschplatte (3) und an dem zweiten Bauteil (2) eine Gegenflanschplatte (4) fest angeordnet ist und diese Platten (3, 4) mit ihren Außenseiten (5, 6) aneinanderliegend miteinander verspannbar sind,
**dadurch gekennzeichnet,**
**daß** an der Außenseite (5) der Flanschplatte (3) ein Verbindungsbolzen (7) vorsteht, der eine in seiner Querrichtung sich erstreckende, von ihrer Oberkante (10) an der Oberseite des Verriegelungsbolzens (7) weg in Richtung zur Flanschplatte (3) hin geneigte Keilschräge (9) aufweist, daß die Gegenflanschplatte (4) eine Durchtrittsöffnung (12) zum Durchführen des Verbindungsbolzens (7) an der Flanschplatte (3) hat und daß an der Innenseite (13) der Gegenflanschplatte (4) ein Verriegelungsteil (15) anlegbar ist, welches in der Verbindungslage den Verriegelungsbolzen (7) umgibt, welches eine mit dessen Keilschräge (9) zusammenwirkende Keilfläche (18) hat und welches an der Seite gegenüber dieser Keilfläche (18) eine gegen den Verbindungsbolzen (7) anziehbare Spannschraube (21) aufweist, wobei die Durchtrittsöffnung (12) der Gegenflanschplatte (4) eine für das Durchführen des Verriegelungsteils (15) in einer von dessen Verriegelungslage abweichenden Lage erforderliche Weite hat und das zweite Bauteil (2) eine Durchstecköffnung (29) zum Anbringen und Betätigen der Spannschraube (21) hat.

2. Flanschverbindung nach Anspruch 1,
**dadurch gekennzeichnet,**
**daß** der Verbindungsbolzen (7) an der Flanschplatte (3) zentral angeordnet ist.

3. Flanschverbindung nach Anspruch 1 oder 2,
**dadurch gekennzeichnet,**
**daß** der Verbindungsbolzen (7) eine in radialer Richtung eingeformte Quernut (8) hat, deren von der Flanschplatte (3) abliegende Flanke die Keilschräge (9) bildet.

4. Flanschverbindung nach Anspruch 1 -3,
**dadurch gekennzeichnet,**
**daß** der Verbindungsbolzen (7) einen quadratischen oder rechteckigen Querschnitt hat und eine der ebenen Seitenflächen des Verbindungsbolzens (7) eine Anlagefläche (22) für die Spannschraube (21) am Verriegelungsteil (15) bildet, wobei sich an der der Anlagefläche (2) gegenüberliegenden Seite des Verbindungsbolzens (7) die Keilschräge (9) befindet.

5. Flanschverbindung nach einem der Ansprüche 1 - 4,
**dadurch gekennzeichnet,**
**daß** das Verriegelungsteil (15) die Form eines geschlossenen Ringes hat.

6. Flanschverbindung nach Anspruch 5,
**dadurch gekennzeichnet,**
**daß** das Verriegelungsteil (15) die Gestalt eines eckigen Ringes hat, wobei die Keilfläche (18) an einem an der Innenseite eines der geraden Ringabschnitte (16) längsseitigen Steg (17) angeordnet ist.

7. Flanschverbindung nach einem der Ansprüche 1 - 6,
**dadurch gekennzeichnet,**
**daß** an dem Verriegelungsteil (15) an der von der Anlageseite (23) für die Gegenflanschplatte (4) wegliegenden Seite eine vorstehende Konsole (19) einstückig angeformt ist, welche eine die Spannschraube (21) aufnehmende Gewindebohrung (20) aufweist.

8. Flanschverbindung nach einem der Ansprüche 1 - 7,
**dadurch gekennzeichnet,**
**daß** das Verriegelungsteil (15) an der Gegenflanschplatte (4) parallel zu deren Innenseite (13) verschieblich gehalten ist.

9. Flanschverbindung nach Anspruch 8,
**dadurch gekennzeichnet,**
**daß** an der Innenseite (13) der Gegenflanschplatte (4) gekröpfte, das Verriegelungsteil (15) hintergreifende Haltelaschen (24) vorstehend angeordnet sind, zwischen denen und dem Verriegelungsteil (15) ein für dessen Verschieblichkeit erforderliches Spiel vorgesehen ist.

10. Flanschverbindung nach einem der Ansprüche 1 - 9,
**dadurch gekennzeichnet,**
**daß** die Durchtrittsöffnung (12) der Gegenflanschplatte (4) quadratisch oder rechteckig ist, wobei in einer der Längs- oder Querrichtungen oder in einer der Diagonalrichtungen die Weite der Durchtrittsöffnung (12) größer als die Außenbreite des Verriegelungsteils (15) ist.

11. Flanschverbindung nach einem der Ansprüche 1 - 10,
**dadurch gekennzeichnet,**
**daß** der Verbindungsbolzen (7) fest an der Flanschplatte (3) angeordnet ist und rund um den Verbindungsbolzen (7) eine von der Außenseite der Flanschplatte (3) her eingeprägte Sicke (26) angeordnet ist, wodurch der Befestigungsbereich (28) des Verbindungsbolzens (7) gegenüber dem übrigen Bereich der Flanschplatte (3) in Richtung von deren Außenseite (5) weg vertieft angeordnet ist.

## Claims

1. Flange coupling between one end side of a vehicle longitudinal support as first component part (1) and a closed support element, such as a crash box, which can be fitted thereon in the longitudinal direction as second component part (2) wherein a flange plate (3) is mounted fixed on the first component part (1) and a counter flange plate (4) is mounted fixed on the second component part (2) and these two plates (3, 4) can be pressed against one another by their outer sides (5,6),
**characterised in that**
a connecting bolt (7) projects on the outside (5) of the flange plate (3) and has a inclined wedge (9) extending in its transverse direction inclined away from its upper edge (10) on the top side of the locking bolt (7) towards the flange plate (3), that the counter flange plate (4) has a through opening (12) for passing through the connecting bolt (17) on the flange plate (3) and that a locking part (15) can be placed against the inside (13) of the counter flange plate (4) to surround in the connecting position the locking bolt (7) and has a wedge face (18) interacting with the inclined wedge (9) and which has on the side opposite this wedge face (18) a tension screw (21) which can be tightened against the connecting bolt (7) whereby the through opening (12) of the counter flange plate (4) has the required width for passing through the locking part (15) in a position deviating from the locking position, and the second component part (2) has a slot opening (29) for attaching and actuating the tension screw (21).

2. Flange coupling according to claim 1,
**characterised in that**
the connecting bolt (7) is mounted centrally on the flange plate (3).

3. Flange coupling according to claim 1 or 2,
**characterised in that**
the connecting bolt (7) has a radially formed transverse groove (8) whose flank remote from the flange plate (3) forms the inclined wedge (9).

4. Flange coupling according to claim 1 to 3,
**characterised in that**
the connecting bolt (7) has a square or rectangular cross section and one of the flat side faces of the connecting bolt (7) forms a contact bearing face (22) for the tension screw (21) on the locking part (15) whereby the inclined wedge (9) is located on the side of the connecting bolt (7) opposite the contact bearing face (2).

5. Flange coupling according to one of claims 1 to 4,
**characterised in that**
the locking part (15) has the shape of a closed ring.

6. Flange coupling according to claim 5,
**characterised in that**
the locking part (15) has the shape of an angular ring wherein the wedge face (18) is mounted on a web (17) along a long side on the inside of one of the straight ring sections (16).

7. Flange coupling according to one of claims 1 to 6,
**characterised in that**
a protruding console bracket (19) is formed in one piece on the locking part (15) on the side remote from the contact bearing side (23) for the counter flange plate (4) and this console bracket has a threaded bore (20) receiving the tension screw (21).

8. Flange coupling according to one of claims 1 to 7,
**characterised in that**
the locking part (15) is held on the counter flange plate (4) displaceable parallel to the inside (13) thereof.

9. Flange coupling according to claim 8,
**characterised in that**
angled retaining tabs (24) engaging behind the locking part (15) are mounted protruding on the inside (13) of the counter flange plate (4) and between these tabs and the locking part (15) there is enough clearance to allow displacement.

10. Flange coupling according to one of claims 1 to 9,
**characterised in that**
the through opening (12) of the counter flange plate (4) is square or rectangular whereby in one of the longitudinal or transverse directions or in one of the diagonal directions the width of the through opening (12) is larger than the external width of the locking part (15).

11. Flange coupling according to one of claims 1 to 10,
**characterised in that**
the connecting bolt (7) is mounted fixed on the flange plate (3) and round the connecting bolt (7) there is a swage (26) which is imprinted from the outside of the flange plate (3) whereby the fixing region (28) of the connecting bolt (7) is mounted recessed opposite the remaining area of the flange plate (3) in a direction away from the outside (5) thereof.

## Revendications

1. Raccord à brides entre l'extrémité frontale d'un longeron de véhicule automobile, en tant que premier élément (1) et un élément de support fermé, fixable à celui-ci, comme un crash box, en tant que deuxième élément (2), une plaque à bride (3) étant agencée fixement au premier élément (1), et une plaque à contre-bride (4) au deuxième élément (2), et ces plaques (3, 4) pouvant être serrées ensemble, l'une à l'autre, par leurs surfaces extérieures (5, 6),
**caractérisé en ce que**,
sur le côté extérieur (5) de la plaque à bride (3), fait saillie une clavette de liaison (7) qui présente un chanfrein (9) s'étendant, dans la direction transversale de la clavette, en pente à partir de son bord supérieur (10), en direction de la plaque (3) à bride (3), sur le côté supérieur de ladite clavette de liaison (7), **en ce que** la plaque à contre-bride (4) est pourvue d'une ouverture de passage (12) amener la clavette de liaison (7) à la plaque à bride (3), et que, sur la surface intérieure (13) de la plaque à contre-bride (4) peut être appliquée une pièce qui, entourant, dans la position d'assemblage, la clavette de liaison (7), possède un chanfrein (18) coopérant avec le chanfrein (9) de celle-ci, et qui, sur le côté opposé à ce chanfrein (18), présente une vis de serrage (21) pouvant être serrée contre la clavette de liaison (7), l'ouverture de passage (12) de la plaque à contre-bride (4) présentant la largeur nécessaire pour le passage de la pièce de verrouillage (15) dans une position divergeant de la position de verrouillage de celle-ci, et le deuxième élément (2) possédant une ouverture d'introduction (29) pour la mise en place et l'actionnement de la vis de serrage (21).

2. Raccord à brides selon la revendication 1,
**caractérisé en ce que**
la clavette de liaison (7) est agencée centralement sur la plaque à bride (3).

3. Raccord à brides selon la revendication 1 ou 2,
**caractérisé en ce que**
la clavette de liaison (7) possède une entaille transversale (8) formée dans la direction radiale, dont le flanc opposé à la plaque à bride (3) forme le chanfrein (9).

4. Raccord à brides selon l'une des revendications 1 à 3,
**caractérisé en ce que**
la cheville de liaison (7) possède une section transversale carrée ou rectangulaire et que l'une des surfaces latérales, planes de ladite cheville de liaison (7) forme une surface de butée (22) pour la vis de serrage (21) sur la pièce de verrouillage (15), le chanfrein (9) se trouvant sur le côté de la cheville de liaison (7) opposé à la surface de butée (2).

5. Raccord à brides selon l'une des revendications 1 à 4,
**caractérisé en ce que**
la pièce de verrouillage (15) a la forme d'une bague fermée.

6. Raccord à brides selon la revendication 5,
**caractérisé en ce que**
la pièce de verrouillage (15) a la forme d'une bague angulaire, le chanfrein (18) étant situé sur une patte (17) longitudinale, sur le côté intérieur de l'une des sections droites (16) de la bague.

7. Raccord à brides selon l'une des revendications 1 à 6,
**caractérisé en ce que**,
sur la pièce de verrouillage (15), sur le côté situé à l'opposé du côté de butée (23) pour la plaque à contre-fiche (4), une console en saillie (19) est formée d'une pièce, laquelle présente un trou fileté (20) recevant la vis de serrage (21).

8. Raccord à brides selon l'une des revendications 1 à 7,
**caractérisé en ce que**
la pièce de verrouillage (15) est maintenue, mobile, sur la plaque à contre-bride (4), parallèlement à la surface intérieure (13) de celle-ci.

9. Raccord à brides selon la revendication 8,
**caractérisé en ce que**,
sur le côté intérieur (13) de la plaque à contre-bride (4), sont disposées en saillie des pattes de maintien (24) coudées agrippant la pièce de verrouillage (15), entre lesquelles et la pièce de verrouillage (15) est prévu un jeu nécessaire à la mobilité de celle-ci.

10. Raccord à brides selon l'une des revendications 1 à 9,
**caractérisé en ce que**
l'ouverture de passage (12) de la plaque à contre-bride (4) est carrée ou rectangulaire, la largeur de ladite ouverture de passage (12) étant plus grande, dans la direction longitudinale ou la direction transversale ou dans l'une des directions diagonales, que la largeur extérieure de la pièce de verrouillage (15).

11. Raccord à brides selon l'une des revendications 1 à 10,
**caractérisé en ce que**
la clavette de liaison (7) est agencée fixement sur la plaque à bride (3) et qu'une moulure (26), estampée à partir de la surface extérieure de la plaque à bride (3), est agencée autour de la clavette de liaison (7) ce par quoi la zone de fixation (28) de la clavette de liaison (7), par rapport au reste du domaine de la plaque à bride (3), est creusée plus profondément dans la direction opposée au côté extérieur de celle-ci.
